# FASCICULE DE BREVET EUROPEEN

(11) **EP 0 381 670 B1**
(45) Date de publication et mention de la délivrance du brevet: **25.01.1995**
(21) Numéro de dépôt: 88904543.1
(22) Date de dépôt: 04.05.1988
(51) Int. Cl.: F03B 13/14

(54) **INSTALLATION DE TRANSFORMATION DE L'ENERGIE CINETIQUE DES VAGUES EN ENERGIE MECANIQUE**
VORRICHTUNG ZUM NUTZBARMACHEN DER MEERESWELLENENERGIE
INSTALLATION FOR CONVERTING THE KINETIC ENERGY OF WAVES TO MECHANICAL ENERGY

(43) Date de publication de la demande: 16.08.1990
(73) Titulaire: ONDE, Marcel, 95580 Margency (FR)
(72) Inventeur: ONDE, Marcel, 95580 Margency (FR)
(86) Numéro de dépôt international: FR8800215
(87) Numéro de publication internationale: WO8911036

(56) Documents cités:
- FR-A- 0 341 477
- FR-A- 2 365 039
- FR-A- 2 401 329

## Description

Devant la demande croissante, dans le monde, d'énergie, surtout électrique, et, compte tenu des effets nocifs et/ou dangereux de l'emploi des sources n'énergie calorifiques à base de charbon, de pétrole, ou atomiques et, du fait, également, de l'utilisation presque totale des ressources en énergie hydraulique, on a été amené à étudier la possibilité d'emploi de nouvelles énergies renouvelables dites propres.

Mais, l'énergie solaire, l'énergie éolienne, l'énergie par gaz naturel n'ont pas permis de réaliser des installations intéressantes du fait des investissements considérables qu'elles nécessitent.

On connait également des installations de transformation de l'énergie naturelle des vagues ou des marées mais, là encore, les installations sont très coûteuses et peu performantes (voir par exemple FR-A-2365039).

Il existe, dans les pays scandinaves, des installations utilisant l'énergie cinétique des vagues pour la compression et la détente des colonnes d'air afin d'entraîner au moins un groupe d'éoliennes dont l'énergie mécanique est transformée en énergie électrique par entraînement d'un alternateur.

Mais, là encore, les rendements sont extrêmement mauvais et les installations fort coûteuses.

Aujourd'hui, ces installations restées à l'état de prototypes produisent une énergie électrique beaucoup plus coûteuses que l'énergie électrique produite par l'énergie thermique (charbon, pétrole ou énergie atomique).

La présente invention a pour objet de créer une installation de transformation de l'énergie cinétique des vagues en énergie mécanique, plus spécialement en énergie mécanique rotative permettant l'entraînement d'un alternateur producteur d'énergie électrique.

Dans l'océan, l'énergie solaire crée, par l'intermédiaire des vents, trois sortes d'énergie à savoir :
a) la marée,
b) l'énergie thermique dûe à l'échauffement de l'eau,
c) les vagues ou la houle.

Cette dernière produite par les vents désigne un mouvement des fluides qui forment une succession de vagues d'amplitude variable suivant la vitesse d'écoulement de l'air produisant le vent.

La profondeur d'une longueur d'onde formant la houle détermine l'amplitude et cette valeur verticale correspond sensiblement à 0,2 % de l'amplitude horizontale de l'onde.

La présente invention utilise cette relation entre l'amplitude verticale et l'amplitude horizontale de l'onde.

Conformément à l'invention, l'installation de transformation de l'énergie cinétique des vagues en énergie mécanique est constituée par un élément de flottaison supportant à sa partie inférieure un chassis ; des moyens de production d'énergie, est caractérisée en ce que ces moyens sont constitués par au moins deux stators composés de pales de direction inverse pour permettre l'entraînement d'une roue à aubes de façon que le mouvement vertical descendant ou ascendant de la houle provoque une entrée d'eau dans les stators afin d'entraîner en rotation la roue à aubes qui, à partir de son moyeu et d'un arbre, transmet le mouvement de rotation à l'élément tournant de l'alternateur électrique et en ce que des doubles cônes sont montés à l'intérieur des stators opposés cylindro-tronconiques formant Venturi afin d'augmenter la vitesse d'écoulement de l'eau assurant la rotation de la roue à aubes.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une coupe verticale et schématique d'un double stator et d'un rotor central.

La fig. 2 est une coupe élévation schématique de l'installation permettant la transformation de l'énergie cinétique verticale en énergie cinétique circulaire afin d'entraîner une turbine et, de là, un alternateur.

La fig. 3 montre une installation de transformation immergée conforme à l'invention et supportée par un caisson flotteur.

La fig. 4 montre schématiquement l'accouplement de deux installations avec le sens de rotation du fluide et du stator de chaque installation.

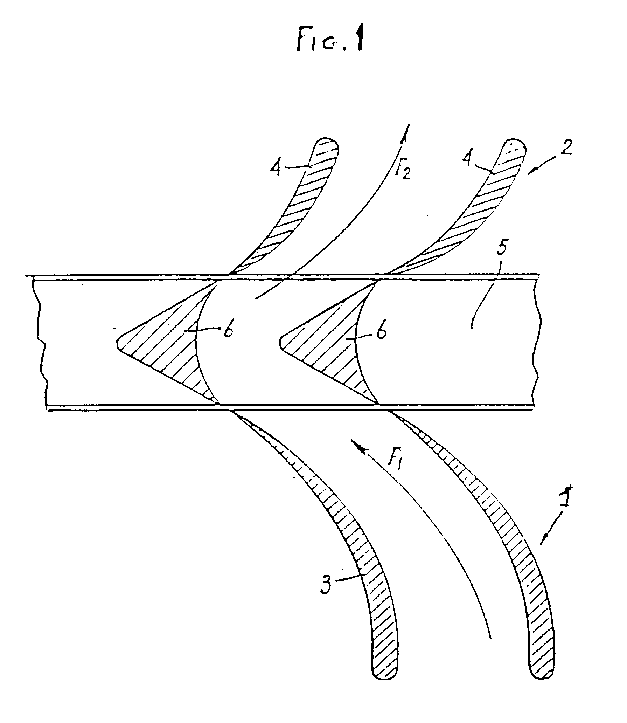

A la fig. 1, il est représenté partiellement et schématiquement un stator inférieur 1 et un stator supérieur 2 dont les pales fixes 3 (stator inférieur 1) et 4 (stator supérieur 2) qui sont séparées par une roue 5 possèdant des aubes 6.

Les pales 3 et 4 des stators 1 et 2 forment des aubes directrices de façon que l'eau, sous l'effet de l'amplitude verticale de l'onde, pénètre suivant la flèche F1 (voir fig. 1) et s'échappe suivant la flèche F2 (voir fig. 1).

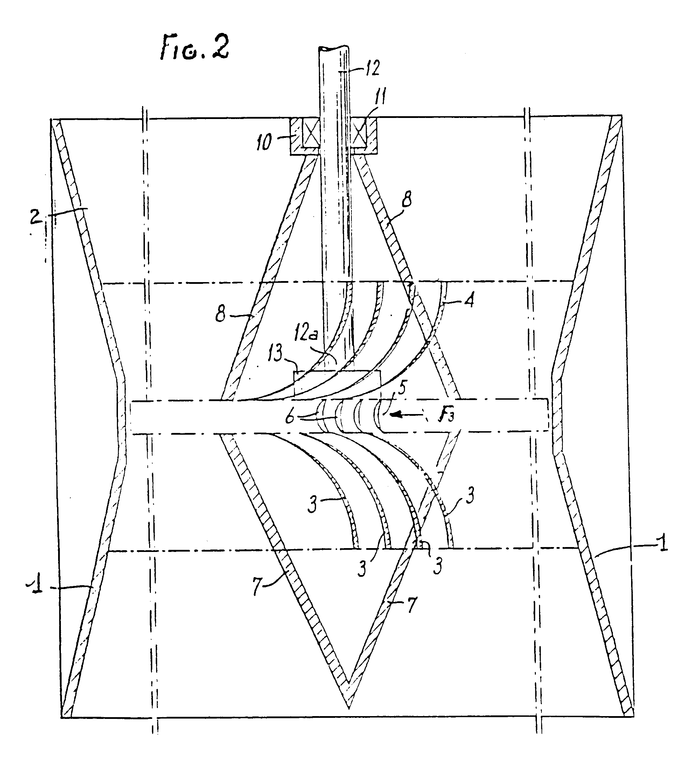

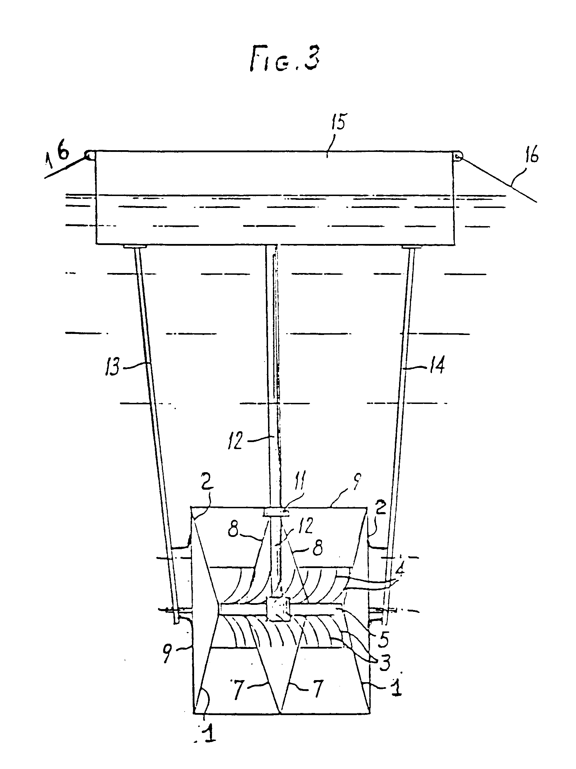

Mais, pendant son passage dans la zone centrale, ce courant d'eau provoque l'entraînement en rotation (voir flèche F3 - fig 2) de la roue 5 qui est reliée comme cela est représenté aux fig. 2 et 3 à un ensemble qui va maintenant être décrit.

Comme on le voit à la fig. 2, les deux stators 1 et 2 sont munis en leur centre d'une partie conique double 7 et 8,
De plus, ces cônes 7 ou 8 font partie de l'enveloppe extérieure 9 (voir fig. 3) des stators par l'intermédiaire des aubes directrices 3 et 4. Le cône supérieur 8 est relié au support 10 d'un palier 11 à billes supportant l'arbre moteur 12 de la turbine 5 qui est solidaire par son extrêmité 12a d'un moyeu latéral 13 de la roue 5.

Comme on peut le voir à la fig. 3, l'enveloppe extérieure séparant les différents organes décrits ci-dessus est maintenue par l'intermédiaire d'un châssis 14 sous le dessous d'un élément flotteur 15 qui surnage à la surface de l'océan et ce flotteur étant convenablement arrimé par des ensembles de câbles 16.

Bien entendu, l'élément flotteur 15 a un volume tel qu'il peut supporter l'ensemble des stators tout en permettant le déplacement vertical proportionnel au creux de l'onde horizontale créée par le vent.

Le fonctionnement de l'installation est le suivant :
Lorsque l'ensemble représenté à la fig. 3 est en place à la surface de l'océan, il subit du fait de la houle des mouvements ascendants et descendants qui suivent les ondes successives formées par les vagues.

Lorsque l'onde tend vers son creux, le niveau de l'eau sur le flotteur 15 se trouve en dessous de sa ligne de flottaison et, de ce fait, le poids de l'ensemble sollicite un mouvement du haut vers le bas et la cloche constituée par les parois extérieures 1 et intérieures 7 du stator inférieur agit comme un piston dans la masse liquide en provoquant une pression dynamique de bas en haut vers l'intérieur qui, sous l'effet des aubes directrices 3, donne à l'eau un mouvement circulaire entraînant en rotation la roue 5.

Cette eau s'évacuera ensuite par le stator supérieur entre les parois 2 et 8 dans le sens indiqué par les flèches F1 et F2 (voir fig. 1). En effet, cette évacuation par le stator supérieur s'effectuera sensiblement à la pression statique du milieu.

Dans le cas où l'onde tend vers le haut, c'est-à-dire, que l'ensemble se soulève, le processus est inversé et ce sont les aubes directrices supérieures du stator 2 qui dirigent le courant d'eau vers les pales 6 de la roue, qui conserve son sens de rotation.

L'installation telle que sus-décrite est prévue de façon à équilibrer la pression dynamique afin d'obtenir un débit d'eau identique dans le mouvement du haut vers le bas et dans le mouvement du bas vers le haut.

La disposition particulière des parois 1 et 7 ou 2 et 8 qui forment des cônes, a pour objet d'augmenter la vitesse de passage de l'eau en diminuant la section de passage afin que dans les deux sens de mouvement on obtienne une puissance pratiquement identique malgré les pertes en charge.

De même, il est possible également d'envisager que la paroi extérieure des stators soit conique comme cela est représenté à la fig. 2 afin de répondre au même motif que précédemment.

Cette disposition permet de ne pas dépasser pour la vitesse linéaire de l'eau, celle de l'écoulement lamelaire ; afin de supprimer toute turbulence.

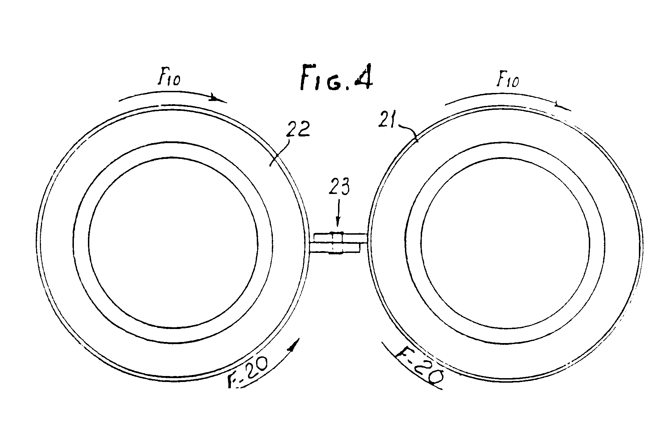

Les fig 1 à 3 montrent une installation unitaire ; mais, afin d'annuler un couple de réaction F-20 sur les stators, l'installation est double en utilisant deux roues tournant dans le même sens (F 10) que celui qui est représenté à la fig. 4. En effet, les stators 21, 22 sont rendus solidaires en 23 ou sont même monoblocs.

Le montage de ce stator se fait en opposition afin d'obtenir un mouvement de rotation des roues dans le même sens (F.10) pour entraîner l'alternateur en continu et obtenir ainsi une fourniture d'énergie électrique constante.

Bien que cela soit maintenant parfaitement connu, il est possible de monter ces installations à bord de plates-formes flottantes équipées de moteur afin de les rendre stables et qui peuvent recevoir toutes indications automatiques pour leur fonctionnement parfait, quelles que soient les conditions météorologiques.

Pour les plates-formes fixées sur le fond de mer, lorsque cela est possible, nous pouvons les doter d'un dispositif mobile se déplaçant verticalement sur un des côtés sous l'impulsion de la houle ; où par l'intermédiaire d'un parallèlogramme déformable.

De même on peut utiliser cette énergie mécanique où électrique pour rendre l'ensemble autonome en accouplant le dispositif moteur à un arbre d'hélice assurant ainsi sa propulsion ; ce qui revient à motoriser des navires avec l'énergie de la houle.

Dans le cas ci-dessus nous pouvons également remplacer le dispositif électrique (génératrice-moteur) par le dispositif pompe hydraulique-moteur hydraulique--haute pression, ce qui nous permet de réguler par l'intermédiaire d'un accumulateur hydraulique.

## Revendications

1. Installation de transformation de l'énergie cinétique des vagues en énergie mécanique constituant un élément de flottaison (15) supportant à sa partie inférieure par un châssis (14) des moyens de production d'énergie, caractérisée en ce que ces moyens. sont constitués par au moins deux stators composés de pâles (3,4) de direction inverse permettant l'entraînement d'une roue à aubes (5) de façon que le mouvement vertical descendant ou ascendant de la houle provoque une entrée d'eau dans les stators, afin d'entraîner toujours dans le même sens la rotation de la roue à aubes (5) qui, à partir de son moyeu et d'un arbre (12), transmet le mouvement de rotation à l'élément tournant d'un alternateur électrique et en ce que des doubles cônes (7 et 8) sont montés à l'intérieur des stators (1 et 2) opposés cylindro-tronconiques formant Venturi afin d'augmenter la vitesse d'écoulement de l'eau assurant la rotation de la roue à aubes (5).

2. Installation suivant la revendication 1, caractérisée en ce que l'on accouple deux éléments double stators (fig 4) afin d'annuler les couples de réaction sur les stators.

3. Installation suivant la revendication 1, caractérisée par le fait que l'on peut utiliser la production de cette énergie mécanique ou électrique pour rendre l'ensemble autonome en commandant soit par moteur électrique ou mécanique l'arbre d'une hélice de propulsion.

4. Installation suivant la revendication 1 et 3, caractérisée par le fait de la possibilité d'équiper des navires, pour leur propulsion, par l'énergie de la houle.

5. Installation suivant la revendication 1, caractérisée par le montage de l'ensemble monté sur un mobile se déplaçant le long d'une tour verticale immergée et fixée au fond de la mer pour des profondeurs compatibles. On peut également amarrer le mobile à la tour par un parallèlogramme déformable.

## Claims

1. A device for converting the kinetic energy of wave motion into mechanical energy consists of a floating element (15), at the bottom of which a chassis (14) supports energy-generating equipment. The generating equipment consists of at least two stators with blades (3, 4) mounted in opposite directions, ensuring that water will be taken into the stators on both rising and falling swell motion, turning the turbine wheel (5) in the same direction of rotation in both cases. Via a hub and shaft (12), the rotary turbine motion is transferred to the rotating part of an electrical generator. Twin cones (7 and 8) are mounted inside opposing cylindrical/tapered stators (1 and 2) to form venturi that increase the speed of the water flow driving the turbine wheel (5).

2. The device as outlined in claim 1 can be fitted with two double-stator elements (4) coupled together to cancel out the reaction torque on the stators.

3. The device as outlined in claim 1 can be made into a self-standing unit in which the electrical or mechanical energy generated by the device is harnessed to power an electrical or mechanical motor that in turn drives a propeller screw.

4. The device as outlined in claims 1 and 3 can be mounted on board a vessel in order to provide swell-powered propulsion.

5. The device as outlined in claim 1 can be mounted on a mobile trolley moving up and down a submerged vertical tower, anchored to the sea bed where depth allows. The mobile trolley could also be made to move up and down the tower on a pantograph mechanism.

## Patentansprüche

1. Anordnung für die Umwandlung kinetischer Wellenenergie in mechanische Arbeit, bestehend aus einem Schwimmkörper (15), an dessen unterem Teil über einen Rahmen (14) Elemente zur Energieproduktion befestigt sind, dadurch gekennzeichnet, daß diese Elemente aus mindestens zwei, aus Gegenrichtungs-Schaufeln (3,4) bestehenden Leiträdern bestehen, die den Antrieb eines Schaufelrades (5) ermöglichen, und zwar in der Weise, daß die vertikale Abwärts- bzw. Aufwärtsbewegung der Wellen eine Wasserzufuhr in die Leiträder verursacht und sich das Schaufelrad (5) immer in die gleiche Richtung dreht, wobei dieses die Rotationsbewegung über seine Nabe und eine Welle (12) zum Drehelement eines elektrischen Wechselstromgenerators überträgt, und dadurch gekennzeichnet, daß im Inneren der Leiträder (1 und 2) sich gegenüberstehende, zylindrischkegelstumpfförmige Doppelkegel (7 und 8) eingebaut sind und dadurch eine Venturi-Düse gebildet wird, die die Abfließgeschwindigkeit des Wassers erhöht, welches die Drehung des Schaufelrads (5) gewährleistet.

2. Anordnung nach Anspruch 1, dadurch gekennzeichnet, daß zwei Doppelleitrad-Elemente (Abb. 4) miteinander gekoppelt werden, um das auf die Leiträder wirkende Reaktionsmoment zu unterdrücken.

3. Anordnung nach Anspruch 1, dadurch gekennzeichnet, daß man die Produktion dieser mechanischen oder elektrischen Energie benutzen kann, um die Einheit autonom zu machen, indem die Welle einer Antriebsschraube entweder durch einen Elektromotor oder auf mechanische Weise angetrieben wird.

4. Anordnung nach Anspruch 1 und 3, dadurch gekennzeichnet, daß es möglich ist, Schiffe mit dieser Anordnung auszurüsten und damit ihren Antrieb durch Wellenenergie zu ermöglichen.

5. Anordnung nach Anspruch 1, dadurch gekennzeichnet, daß die Anordnung auf ein mobiles Element montiert wird, das sich bei geeigneten Meerestiefen entlang eines im Meer versenkten und am Meeresboden verankerten vertikalen Turms bewegt. Das mobile Element kann ebenfalls mittels eines elastischen Parallelogramms am Turm befestigt werden.
